Europäisches Patentamt

European Patent Office

Office européen des brevets

(19)

(11) Veröffentlichungsnummer : **0 055 379**
**B1**

(12) **EUROPÄISCHE PATENTSCHRIFT**

(45) Veröffentlichungstag der Patentschrift :
28.11.84

(21) Anmeldenummer : **81109195.8**

(22) Anmeldetag : **29.10.81**

(51) Int. Cl.³ : **D 03 C  5/00, F 16 H 35/02**

(54) **Getriebe zur Erzeugung eines ungleichförmigen Abtriebes aus einem gleichförmigen Antrieb.**

(30) Priorität : **30.12.80 CH 9630/80**

(43) Veröffentlichungstag der Anmeldung :
**07.07.82 Patentblatt 82/27**

(45) Bekanntmachung des Hinweises auf die Patenterteilung : **28.11.84 Patentblatt 84/48**

(84) Benannte Vertragsstaaten :
**AT BE CH FR GB IT LI NL SE**

(56) Entgegenhaltungen :
**DE-A- 1 955 446**
**DE-A- 2 800 835**
**DE-B- 1 129 029**
**FR-A- 2 112 529**

(73) Patentinhaber : **Textlima AG**
**Seestrasse 97**
**CH-6052 Hergiswil (CH)**

(72) Erfinder : **Speich, Francisco**
**Bleumattstrasse 440**
**CH-5264 Gipf-Oberfrick (CH)**

(74) Vertreter : **Schmauder, Klaus Dieter et al**
**c/o Schmauder & Wann Patentanwaltsbüro Nidelbad-**
**strasse 75**
**CH-8038 Zürich (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein Getriebe gemäss Oberbegriff des Anspruches 1.

Ein Getriebe der eingangs genannten Art ist aus der CH-PS 531 073 bekannt. Dabei ist das Antriebsglied an einer fliegend gelagerten Antriebswelle angeordnet. Der vom Planetenrad angetriebene Kurbelzapfen greift in eine angenähert radial verlaufende Nut einer Gegenscheibe ein, die mit der Abtriebswelle fest verbunden ist. Diese Ausbildung des Getriebes weist verschiedene Nachteile auf, welche die zu übertragende Leistung des Getriebes, sowie seine Lebensdauer erheblich begrenzen. Die bei diesem Getriebe erforderliche fliegende Lagerung der Antriebs — wie der Abtriebswelle begrenzen die zu übertragende Kraft, da dies sonst zu einer Durchbiegung der Wellen führen würde. Gleiches gilt auch für den fliegend gelagerten Kurbelzapfen, der von dem Planetenrad angetrieben wird. Der Eingriff des Kurbelzapfens in die Nut der mit der Abtriebswelle verbundenen Gegenscheibe führt zu erheblichem Verschleiss, wodurch wiederum der zu übertragenden Antriebskraft Grenzen gesetzt sind, die Genauigkeit des Getriebes beeinträchtigt ist und der Lebensdauer des Getriebes enge Grenzen gesetzt sind. Abgesehen davon führt der Verschleiss des Kurbelzapfens in der Nut zu einer unerwünschten Geräuschentwicklung des Getriebes. Diese Nachteile lassen sich trotz der aufwendigen Ausbildung des Getriebes nicht vermeiden.

Weiter ist aus der DE-OS 2 800 835 ein weiteres Getriebe bekannt, bei dem ein mit der Antriebswelle fest verbundenes Sonnenrad mit einem an einer Zwischenwelle angeordneten Planetenrad kämmt. An der Zwischenwelle ist ein weiteres Stirnrad drehfest angeordnet, das mit einem Stirnrad an der Abtriebswelle kämmt. Die Antriebs- und die Abtriebswelle sind fliegend gelagert, koaxial angeordnet und tragen gemeinsam eine U-förmige Schwinge, in der die Zwischenwelle um die Antriebs- und die Abtriebswelle schwenkbar gelagert ist. Die Zwischenwelle ist ausserhalb der U-förmigen Schwinge mit einer Kurbel versehen, an der eine Pleuelstange angelenkt ist, die schwenkbar an einem ortsfesten Bolzen angeordnet ist.

Mit dieser Ausbildung wird zwar die oben beschriebene nachteilige Zapfen/Nut-Anordnung vermieden, doch bleibt auch bei dieser bekannten Anordnung die fliegende Lagerung der Antriebs- und der Abtriebswelle mit den damit verbundenen Nachteilen bestehen. Im übrigen ist der Aufbau des Getriebes sehr kompliziert und durch die hohen exzentrischen Massenkräfte in der Drehzahl begrenzt.

Aufgabe der Erfindung ist es, ein Getriebe der eingangs genannten Art so auszubilden, dass es die geschilderten Nachteile nicht aufweist.

Diese Aufgabe wird durch die kennzeichnenden Merkmale des Anspruches 1 gelöst.

Dadurch, dass das Antriebsglied auf der Abtriebswelle drehbar gelagert ist, kann die Abtriebswelle zweifach gelagert werden, sodass eine fliegende Lagerung der Abtriebswelle entfällt. Dadurch lässt sich mit einfachen Mitteln eine stabilere Ausbildung des Getriebes erzielen, wodurch eine grössere Kraftübertragung bei längerer Lebensdauer des Getriebes möglich ist. In gleicher Richtung wirkt insbesondere auch die Uebertragung der Antriebskraft vom Kurbelzapfen über ein Koppelglied an den mit der Antriebswelle verbundenen Schwingarm. Dadurch werden Führungsnuten völlig vermieden, wodurch eine spielfreie Übertragung hoher Antriebskräfte möglich ist, wobei insbesondere der Verschleiss und damit auch die Lärmentwicklung eines solchen Getriebes vermieden werden. Damit ergibt sich ein Getriebe, das bei hohen Übertragungskräften eine hohe Genauigkeit, Geräuscharmut und lange Lebensdauer gewährleistet. Diese Vorteile werden trotz einfachstem Aufbau des Getriebes erzielt.

Vorteilhafte Ausführungen des Getriebes sind in den Ansprüchen 2 bis 7 umschrieben.

Wie bereits erwähnt, ist durch die erfindungsgemässe Ausbildung eine Ausgestaltung des Getriebes nach Anspruch 2 möglich, wodurch bei einfachem Aufbau hohe Antriebsleistungen übertragen werden können.

Zu einer Schonung des Getriebes und zu einem ruhigen Lauf trägt die Ausbildung des Getriebes nach Anspruch 3 bei.

Die Ausgestaltung des Getriebes nach Anspruch 4 ermöglicht eine einfache Anpassung des Getriebes an verschiedene Betriebsbedingungen. Andererseits kann zu einer Änderung der Exzentrizität des Kurbelzapfen, die Kurbelwelle ausgewechselt werden.

Besonders vorteilhaft ist die Ausgestaltung des Getriebes nach Anspruch 5. Die Ausbildung des Antriebsgliedes als zweiwangigen Antriebskäfig und der damit verbundenen doppelten Lagerung, sowie die doppelseitige Lagerung der Kurbelwelle des Planetenrades ermöglichen eine besonders hohe Kräftübertragung bei grosser Genauigkeit und geringem Verschleiss des Getriebes. Diese vorteilhaften Eigenschaften werden durch die Ausbildung nach Anspruch 6 weiter verbessert.

Für den Antrieb des Antriebsgliedes sind die verschiedensten Möglichkeiten denkbar, so beispielsweise ein Stirnzahnradgetriebe, ein Kettengetriebe, ein Zahnriemengetriebe und dergleichen. Besonders vorteilhaft ist eine Ausgestaltung des Antriebes nach Anspruch 7.

Das Getriebe lässt sich für verschiedene Verwendungszwecke einsetzen. Besonders vorteilhaft ist es für den Antrieb der Fachbildevorrichtung einer Webmaschine, insbesondere einer Bandwebmaschine, wobei es besonders zweckmässig ist, wenn die Abtriebswelle des Getriebes gleichzeitig die Welle der Fachbildevorrichtung bildet.

Ausführungsbeispiele des erfindungsgemässen Getriebes werden nachfolgend anhand der Zeichnungen näher beschrieben. Dabei zeigen :

Figur 1 die Anordnung des Getriebes zum Antrieb einer Fachbildevorrichtung in einer Webmaschine in schematischer Darstellung ;

Figur 2 das Getriebe der Fig. 1 im Schnitt II-II der Fig. 5 ;

Figuren 3-7 das Getriebe der Fig. 2 im Schnitt V-V in verschiedenen Betriebsstellungen ;

Figur 8 ein Diagramm der Winkelgeschwindigkeiten der Abtriebswelle im Verhältnis zur Winkelgeschwindigkeit des Antriebsgliedes beim Kurbelradiusglied R = 0 ; und

Figuren 9 und 10 Diagramme mit zwei Winkelgeschwindigkeiten der Abtriebswelle im Verhältnis zur Winkelgeschwindigkeit des Antriebsgliedes je nach Einstellung des Kurbelradius R.

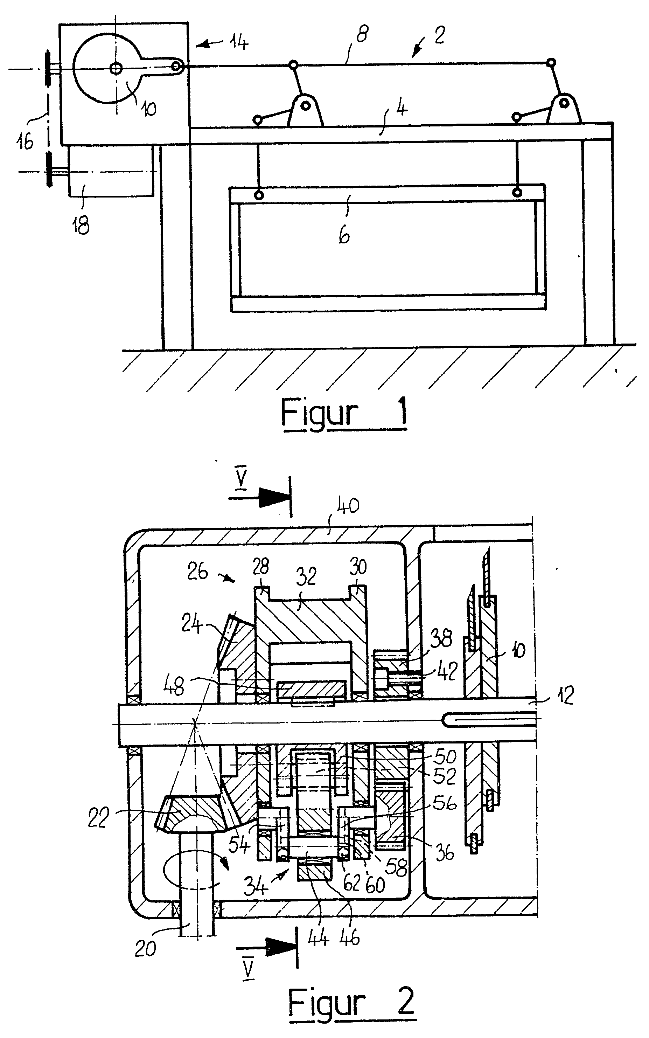

Die Fig. 1 zeigt in schematischer Darstellung die Fachbildevorrichtung 2 einer Webmaschine. In einem Gestell 4 sind Schaftrahmen 6 angeordnet, die über Schaftzugorgane 8 gehalten und betätigt werden. Die Schaftzugorgane 8 sind wiederum mit Exzentern 10 verbunden, die auf einer Welle 12 angeordnet sind. Diese Welle 12 ist identisch mit der Abtriebswelle des Getriebes 14 zum Antrieb der Fachbildevorrichtung 2. Das Getriebe 14 wird über einen Kettentrieb 16 von einem Motor 18 oder einer sonstigen Antriebswelle der Webmaschine angetrieben.

Das Getriebe 14 ist in den Fig. 2 bis 7 im einzelnen dargestellt. Die vom Kettentrieb 16 angetriebene Antriebswelle 20 trägt ein Kegelritzel 22, das mit einem Kegelrad 24 kämmt, welches seitlich an einem als Antriebskäfig ausgebildeten Antriebsglied 26 befestigt ist. Das käfigartig ausgebildete Antriebsglied 26 enthält zwei Wangen 28, 30, die über einen als Aus-gleichsgewicht ausgebildeten Steg 32 miteinan-der verbunden sind. Die Wangen 28, 30 sind auf der Abtriebswelle 12 drehbar gelagert. Auf der dem Steg 32 abgewandten Seite tragen die Wangen 28, 30 eine Kurbelwelle 34, die mit einem ausserhalb des Antriebsgliedes 26 liegenden Planetenrad 36 verbunden ist. Letzteres wirkt mit einem Sonnenrad 38 zusammen, welches am Gehäuse 40 mittels Schrauben 42 ortsfest befestigt ist. Die in den Wangen 28, 30 zweifach gelagerte Kurbelwelle 34 weist einen Kurbelzapfen 44 auf, an dem ein Koppelglied 46 angelenkt ist, das wiederum mit einem Schwingarm 48 gelenkig verbunden ist, der drehfest an der Welle 12 befestigt ist. Der Schwingarm 48 enthält einen gabelartigen Lagerteil 50 zur doppelseitigen Halterung des Anschlussbolzens 52 für das Koppelglied 46.

Zur Verstellung der Exzentrizität R des Kurbelzapfens 44 der Kurbelwelle 34 sind die Kurbelwangen 54, 56 mit schwalbenschwanzförmigen Führungsnuten 58 ausgestattet, in denen entsprechende Führungsprismen 60 des Kurbelzapfens 44 verschiebbar gelagert sind. Klemmschrauben 62 dienen zur Festlegung der Führungsprismen 60 und damit des Kurbelzapfens 44 in den Führungsnuten 58 der Kurbelwangen 54, 56.

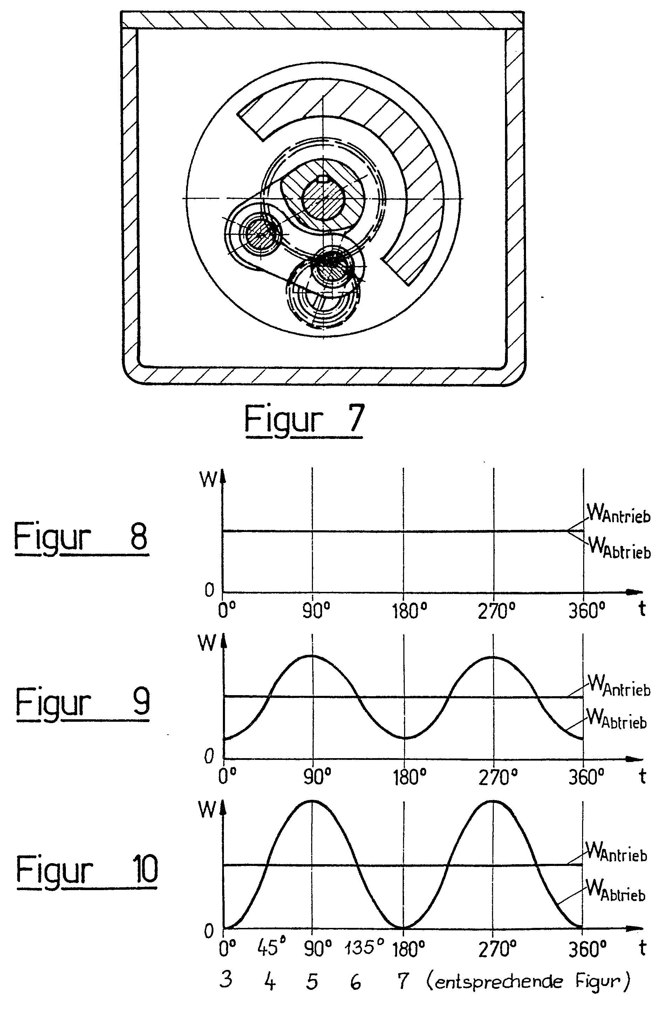

Im vorliegenden Beispiel ist das Planetengetriebe als Stirnradgetriebe ausgebildet, welches ein aussenverzahntes Sonnenrad 38 aufweist. Es ist aber auch durchaus möglich, das Planetengetriebe anders auszubilden, beispielsweise mit einem innenverzahnten Sonnenrad zu versehen. Auch sind Planetengetriebe auf der Basis von Kettengetrieben und Zahnradgetrieben möglich. Das Planetengetriebe weist zweckmässigerweise ein Übersetzungsverhältnis von Planetenrad zu Sonnenrad von 1 : 1 oder 1 : 2 auf. Dies bedeutet, dass die Abtriebsgeschwindigkeit im ersten Falle mit einer vollen Schwingung einer Zusatzgeschwindigkeit überlagert ist und im anderen Falle mit zwei Schwingungen einer Zusatzgeschwindigkeit, wie dies aus den Fig. 9 und 10 für das Übersetzungsverhältnis 1 : 2 hervorgeht.

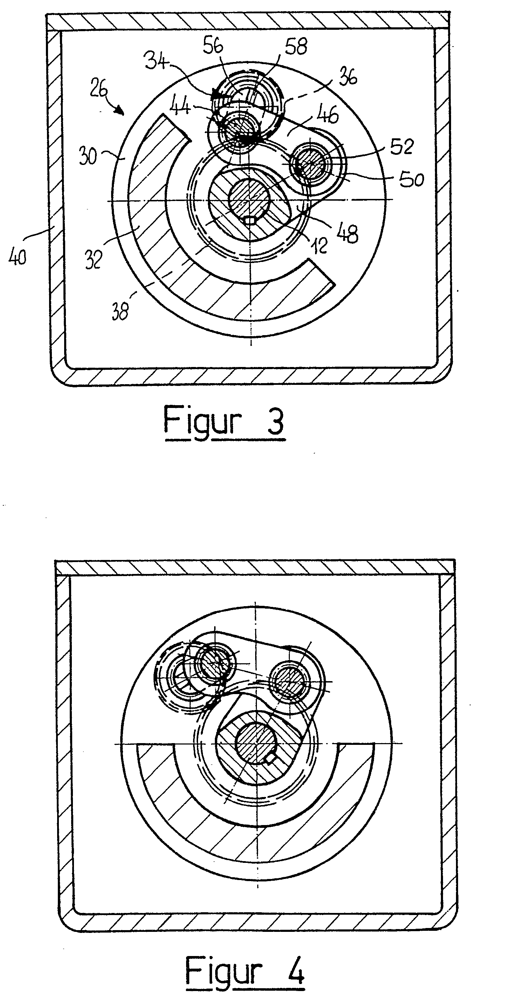

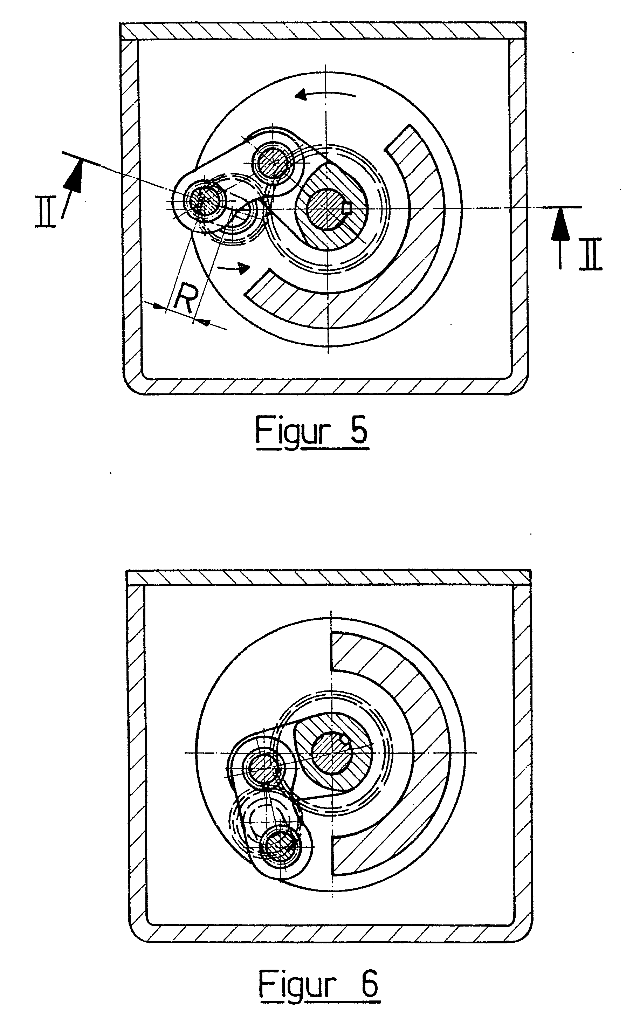

Wie bereits angedeutet, wird der Abtriebsgeschwindigkeit der Abtriebswelle durch die durch das Planetengetriebe 36, 38 angetriebene Kurbelwelle 34 eine Zusatzgeschwindigkeit aufgeprägt, die einmal positiv und einmal negativ ist und je nach Grösse des Kurbelradius bis zu einem vorübergehenden Stillstand der Antriebswelle führen kann, wie aus Fig. 10 hervorgeht. Dabei entspricht die Bewegungsphase der Fig. 3 der Drehwinkelstellung 0 bzw. 360° in dem Diagramm der Fig. 9 und 10, da in dieser Stellung die grösste gegenläufige Bewegung erzeugt wird. Die Bewegungsphase der Fig. 4 entspricht der Drehwinkelstellung von 45°, da in dieser Phase die Winkelgeschwindigkeit des Antriebsgliedes gleich der Winkelgeschwindigkeit der Antriebswelle ist. In der Bewegungsphase der Fig. 5 eilt die Abtriebsgeschwindigkeit der Antriebsge-schwindigkeit vor entsprechend der Winkel-stellung 90° in den Diagrammen 9 und 10. Die Fig. 6 zeigt die Antriebsvorrichtung in der Winkelstellung 135°, in der wiederum die Winkelgeschwindigkeit der Abtriebswelle gleich der Winkelgeschwindigkeit des Antriebsgliedes ist.

Der Unterschied der Geschwindigkeitsdiagramme der Fig. 9 und 10 ergibt sich durch die Grösse der Kurbelexzentrizität R. Wenn die Kurbelexzentrizität R = 0 ist, ist die Abtriebsge-schwindigkeit gleich der Antriebsge-schwindigkeit, wie in Fig. 8 gezeigt ist.

Beim Bewegungsdiagramm der Fig. 9 verbleibt eine gewisse Restgeschwindigkeit an der Antriebswelle. Wird die Kurbelexzentrizität weiter vergrössert, so kann die Abtriebswelle periodisch zum Stillstand kommen, wie aus dem Diagramm der Fig. 10 hervorgeht.

**Ansprüche**

1. Getriebe zur Erzeugung eines ungleichförmigen Abtriebes aus einem gleichförmigen Antrieb, insbesondere für die Fachbildevorrichtung einer Webmaschine, vorzugsweise einer Bandwebmaschine, mit einem Planetengetriebe, dessen Planetenrad (36) in einem gleichförmig angetriebenen, koaxial zum ortsfesten Sonnenrad (38) rotierenden Antriebsglied (26) gelagert ist und das einen Kurbelzapfen (44) antreibt, der mit der Abtriebswelle (12) antriebmässig verbunden ist, dadurch gekennzeichnet, dass das angetriebene Antriebsglied (26) auf der Abtriebswelle (12) drehbar gelagert ist und der vom Planetenrad (36) angetriebene Kurbelzapfen (44) über ein Koppelglied (46) mit einem drehfest mit der Abtriebswelle (12) verbundenen Schwingarm (48) verbunden ist.

2. Getriebe nach Anspruch 1, dadurch gekennzeichnet, dass die Abtriebswelle (12) mindestens zweifach gelagert ist und das Antriebsglied (26) zwischen zwei Lagerstellen auf der Abtriebswelle (12) angeordnet ist.

3. Getriebe nach Anspruch 1 oder 2, dadurch gekennzeichnet, dass das Antriebsglied (26) bezüglich seiner Drehachse auf der dem Lager des Planetenrades (36) abgewandten Seite als Ausgleichsgewicht (32) ausgebildet ist.

4. Getriebe nach Anspruch 1, dadurch gekennzeichnet, dass die Exzentrizität (R) des Kurbelzapfens (44) veränderbar ist.

5. Getriebe nach Anspruch 1, dadurch gekennzeichnet, dass das Antriebsglied (26) als zweiwangiger Antriebskäfig ausgebildet ist, dessen Wangen (28, 30) auf der Abtriebswelle (12) gelagert sind und auf einer Seite eine doppelseitige Lagerung für die als Kurbelwelle (34) ausgebildete Welle des Planetenrades (36) bilden.

6. Getriebe nach Anspruch 1, dadurch gekennzeichnet, dass der Schwingarm (48) einen gabelartigen Lagerteil (50) zur doppelseitigen Halterung des Anschlussbolzens (52) des Koppelgliedes (46) aufweist.

7. Getriebe nach Anspruch 1, dadurch gekennzeichnet, dass es zum Antrieb des Antriebsgliedes (26) ein Kegelgetriebe (22, 24) aufweist, wobei das Kegelrad (24) am Antriebsglied (26) angeordnet ist.

## Claims

1. A gear for producing a non-uniform power-take-off from a uniform drive, more especially for the shed-forming device of a loom preferably of a ribbon loom, having a planetary gear, the planet wheel (36) of which is mounted in a uniformly-driven driving member (26) rotating coaxially to the stationary sun-wheel (38) and which drives a crankpin (44) which is drivingly connected to the power-take-off shaft (12), characterised in that the driven driving member (26) is mounted rotatably on the power-take-off shaft (12) and the crankpin (44) driven by the plant wheel (36) is connected by way of a coupling member (46) to a swing arm (48) connected in a torsionally-fast manner to the power-take-off shaft (12).

2. A gear according to Claim 1, characterised in that the power-take-off shaft (12) has at least two bearings and the driving member (26) is arranged between two bearings on the power-take-off shaft (12).

3. A gear according to Claim 1 or 2, characterised in that the driving member (26) is designed as a counter-balance (32) with respect to its axis of rotation on the side remote from the bearing of the planet wheel (36).

4. A gear according to Claim 1, characterised in that the eccentricity (R) of the crankpin (44) is variable.

5. A gear according to Claim 1, characterised in that the driving member (26) is designed as a two-cheeked driving cage, the cheeks (28, 30) of which are mounted on the power-take-off shaft (12) and on one side form a double-sided bearing for the shaft, designed as a crank-shaft (34), of the planet wheel (36).

6. A gear according to Claim 1, characterised in that the swing arm (48) has a fork-like bearing part (50) for the double-sided mounting support of the connection pin (52) of the coupling member (46).

7. A gear according to Claim 1, characterised in that it has a bevel gear (22, 24) for the drive of the driving member (26), the bevel wheel (24) being arranged on the driving member (26).

## Revendications

1. Transmission pour engendrer un mouvement de sortie irrégulier à partir d'un mouvement d'entrée uniforme, en particulier pour le dispositif d'ouverture de la foule d'un métier à tisser et de préférence d'un métier à tisser des rubans, comportant un engrenage planétaire dont la roue satellite (36) est montée dans un organe d'entraînement (26) entraîné selon un mouvement uniforme et tournant coaxialement à la roue planétaire (38) immobilisée en déplacement, et qui entraîne un maneton (44) qui est relié, à fin d'entraînement, à l'arbre mené (12), caractérisée en ce que l'organe d'entraînement (26) mené est monté à rotation sur l'arbre mené (12) et le maneton (44) entraîné par la roue satellite (36) est relié, par l'intermédiaire d'un organe d'accouplement (46), à une biellette (48) calée, immobile en rotation sur l'arbre mené (12).

2. Transmission selon la revendication 1, caractérisée en ce que l'arbre mené (12) est monté sur au moins deux portées, et l'organe d'entraînement (26) est disposé entre deux points d'appui de l'arbre mené (12).

3. Transmission selon la revendication 1 ou 2, caractérisée en ce que l'organe d'entraînement (26) est conçu sous la forme d'un contrepoids d'équilibrage (32) vis-à-vis de son axe de rotation, sur le côté opposé au palier de montage de la roue satellite (36).

4. Transmission selon la revendication 1, caractérisée en ce que l'excentricité (R) du maneton (44) est modifiable.

5. Transmission selon la revendication 1, caractérisée en ce que l'organe d'entraînement (26) est conçu sous la forme d'une cage d'entraînement à deux flasques, dont les flasques (28, 30) sont montés sur l'arbre mené (12) et forment, sur un côté, un double point d'appui pour l'arbre de la roue satellite (36) conçu en forme d'arbre à manivelle (34).

6. Transmission selon la revendication 1, caractérisée en ce que la biellette (48) présente une partie de montage en forme de fourche (50) pour supporter de chaque côté le tourillon de liaison (52) de l'organe d'accouplement (46).

7. Transmission selon la revendication 1, caractérisée en ce qu'elle présente un engrenage conique (22, 24) pour entraîner l'organe d'entraînement (26), la roue conique (24) étant montée sur l'organe d'entraînement (26).

Figur 1

Figur 2

Figur 3

Figur 4

II

R

II

**Figur 5**

**Figur 6**

Figur 7

Figur 8

Figur 9

Figur 10

3    4    5    6    7   (entsprechende Figur)